# EUROPÄISCHE PATENTANMELDUNG

(11) **EP 0 668 255 A2**
(43) Veröffentlichungstag der Anmeldung: **23.08.1995**
(21) Anmeldenummer: 95101604.7
(22) Anmeldetag: 07.02.1995
(51) Int. Cl.: C04B 35/581, C04B 35/64

(54) **Verfahren zur Herstellung von nichtoxidischer Keramik mit definierter Wärmeleitfähigkeit**

(30) Priorität: 22.02.1994 DE 4405652
(71) Anmelder: HOECHST AKTIENGESELLSCHAFT, 65929 Frankfurt am Main (DE)
(72) Erfinder: Buckpesch, Rainer, D-65719 Hofheim (DE); Güther, Hans-Michael, D-61462 Königstein (DE); Köstler, Christine, Dr., D-65719 Hofheim (DE); Roosen, Andreas, Dr., D-65719 Hofheim (DE); Seitz, Katharina, Dr., D-60596 Frankfurt (DE)

(57) **Zusammenfassung**

Es wird ein Verfahren zur Herstellung von nichtoxidischer Keramik mit einer Wärmeleitfähigkeit in einem vorbestimmten Bereich vorgeschlagen. Ein Formkörper aus nichtoxidischem keramischem Material wird zum Entfernen organischer Bestandteile erhitzt, anschließend wird er in einer sauerstoffhaltigen Atmosphäre thermisch behandelt zum Einbau von Sauerstoffatomen in das Kristallgitter der nichtoxidischen Keramik, wobei die Temperatur und/oder die Haltezeit bei dieser Temperatur in Abhängigkeit des vorbestimmten Bereichs der Wärmeleitfähigkeit gewählt wird, und abschließend wird der Formkörper in nichtoxidierender Atmosphäre gesintert.

## Beschreibung

Die vorliegende Erfindung betrifft ein Verfahren zur Herstellung von nichtoxidischer Keramik mit einer Wärmeleitfähigkeit in einem vorbestimmten Bereich, bei dem ein Formkörper aus nichtoxidischem keramischem Material zum Entfernen organischer Bestandteile erhitzt und abschließend in nichtoxidierender Atmosphäre gesintert wird. Insbesondere betrifft die vorliegende Erfindung ein Verfahren zur Herstellung von Aluminiumnitrid-Keramik mit definierter Wärmeleitfähigkeit.

Auf dem Gebiet der technischen Keramik wurden neue Materialien mit vielversprechenden Eigenschaften für die elektronische Industrie aber auch für andere spezielle Anwendungsgebiete entwickelt. Zu diesen Materialien zählen Carbide und Nitride, wie Siliciumcarbid, Siliciumnitrid und Aluminiumnitrid. In der elektronischen Industrie wurde es mit steigender Miniaturisierung, höheren Schaltströmen, höheren Frequenzen und den damit verbundenen steigenden Verlustleistungen erforderlich, ein isolierendes aber gleichzeitig wärmeleitendes Material zu entwickeln. Diesen Anforderungen wird Aluminumnitrid in besonderer Weise gerecht. Mit einer derzeit erreichten Wärmeleitfähigkeit von durchschnittlich 170 W/m·K verbindet Aluminiumnitrid die Isolationseigenschaften des Aluminiumoxids mit den Wärmeleiteigenschaften des Kupfers. Verbunden mit diesen Eigenschaften ist es außerdem möglich, keramische Formkörper aus Aluminiumnitrid relativ preiswert herzustellen im Vergleich zu konkurrierenden Materialien, wie Diamant oder Berylliumoxid.

Es sind bereits zahlreiche Veröffentlichungen erschienen, die sich mit dem Zusatz unterschiedlicher Stoffe zu nichtoxidischer Keramik beschäftigen, um die Eigenschaften der Keramik zu beeinflussen, insbesondere um eine möglichst hohe Wärmeleitfähigkeit zu erreichen. So wird zum Beispiel in der EP 0 347 552 A2 ein Verfahren zur Herstellung von nichtoxidischer Keramik beschrieben, bei dem dem keramischen Pulver eine Metallverbindung, unter anderem ein NiO-Y₂O₃ Gel zugesetzt wird. Dadurch soll eine höhere Dichte beim Sintern und damit eine höhere Wärmeleitfähigkeit erzielt werden.

Bei einem aus der EP 0 452 871 A1 bekannten Verfahren werden Kohlenstoff, ein Seltene Erden-Oxid und Verbindungen von Elementen der Gruppen IVB, VB und VIB des Periodensystems zugesetzt, um eine gefärbte Aluminiumnitrid-Keramik mit hoher Wärmeleitfähigkeit zu erzielen.

Mit dem Zusatz von Fremdatomen zur nichtoxidischen Keramik wird das polykristalline Gefüge des keramischen Materials verändert, so daß die Erhöhung der Wärmeleitfähigkeit mit einer Änderung der elektrischen und mechanischen Eigenschaften verbunden ist.

Aus der EP 0 276 148 A2 ist ein Verfahren zum möglichst vollständigen Entfernen von aus Bindemitteln stammendem Kohlenstoff oder Kohlenstoffverbindungen bekannt, die sonst beim Sintern von nichtoxidischer Keramik in nichtoxidierender Atmosphäre nicht vollständig ausgetrieben werden und die Eigenschaften der Keramik ungünstig beeinflussen. In der Druckschrift wird vorgeschlagen, vor dem Sintern den Grünkörper in einer sauerstoffhaltigen Atmosphäre bei Temperaturen im Bereich von 430°C bis 820°C zu erhitzen, um das Bindemittel vollständig auszutreiben, wobei jegliche Oxidation des nichtoxidischen Keramikmaterials vermieden wird. Sowohl in dieser Druckschrift als auch in anderen Literaturstellen wird darauf hingewiesen, daß ein Einbau von Sauerstoff in das Kristallgitter die Wärmeleitfähigkeit der nichtoxidischen Keramik herabsetzt.

Neben dem Haupteinsatzgebiet, der Elektronik, gibt es zahlreiche technische Anwendungen, die außer den elektrischen und thermischen auch die mechanischen Eigenschaften der nichtoxidischen Keramikmaterialien ausnutzen. In einem dieser Anwendungsgebiete, dem thermischen Messer (hot knife), das zum Durchbrennen der Verspannschnüre der Sonnensegel von Weltraumsatelliten verwendet wird, ist es erforderlich, die Wärmeleitfähigkeit der Aluminiumnitrid-Keramik in einem vorbestimmten Bereich einzustellen, der nicht dem derzeitigen Standard entspricht. Im allgemeinen werden dabei Wärmeleitfähigkeiten von 70 bis 100 W/m·K benötigt.

Aufgabe der vorliegenden Erfindung ist es, ein Verfahren der eingangs genannten Art zu schaffen, bei dem eine nichtoxidische Keramik mit einer Wärmeleitfähigkeit in einem vorbestimmten Bereich erhalten wird, ohne daß sich die elektrischen und mechanischen Eigenschaften der nichtoxidischen Keramik ändern.

Ausgehend von dem eingangs genannten Verfahren wird diese Aufgabe dadurch gelöst, daß der Formkörper nach dem Ausheizen der organischen Bestandteile und vor dem Sintern in einer sauerstoffhaltigen Atmosphäre thermisch behandelt wird zum Einbau von Sauerstoffatomen in das Kristallgitter der nichtoxidischen Keramik, wobei die Höhe der Temperatur und/oder die Haltezeit bei dieser Temperatur in Abhängigkeit des vorbestimmten Bereichs der Wärmeleitfähigkeit gewählt werden.

Mit diesem Verfahren ist es möglich, ohne daß das keramische Ausgangsmaterial durch Zusätze geändert werden muß, eine Keramik mit einer bestimmten gewünschten Wärmeleitfähigkeit durch den gezielten Einbau von Sauerstoffatomen in das Gitter der nichtoxidischen Keramik herzustellen. Bisher wurde immer nur durch Zusätze zum keramischen Ausgangsmaterial versucht, die Wärmeleitfähigkeit zu beeinflussen. Dies kann jedoch die übrigen Eigenschaften der Keramik verändern, wie weiter oben schon hingewiesen wurde.

Die beim erfindungsgemäßen Verfahren in das Gitter eingebauten Sauerstoffatome bilden Phononenstreuzentren und setzen so die Wärmeleitfähigkeit herab. Je mehr Sauerstoffatome in das Gitter eingebaut werden, umso niedrigere Wärmeleitfähigkeiten werden erreicht und umgekehrt.

Vor dem Einbau der Sauerstoffatome werden die organischen Bestandteile aus dem Formkörper, im folgenden auch Grünkörper genannt, entfernt. Diese organischen Bestandteile sind zur Formgebung des keramischen Materials notwendig. Es handelt sich um Bindemittel, Weichmacher und Dispergiermittel. Dem Fachmann sind diese verschiedenen Zusätze geläufig. Als Bindemittel können z.B. Polyvinylalkohole, Polyvinylbutyrale und andere Stoffe verwendet werden. Übliche Weichmacher sind zum Beispiel Dibutylphthalat, Polyethylenglykole u.s.w.. Als Dispergiermittel können Tenside eingesetzt werden. Beim Erhitzen der Grünkörper werden diese organischen Bestandteile ausgetrieben. Die Temperatur richtet sich nach den jeweils verwendeten organischen Bestandteilen. In der Regel liegt sie im Bereich von etwa 400°C bis 800°C.

Es ist zweckmäßig diesen Schritt des Ausheizens der organischen Bestandteile beim erfindungsgemäßen Verfahren auch in sauerstoffhaltiger Atmosphäre durchzuführen und gleich anschließend ohne zwischenzeitliche Abkühlung die thermische Behandlung zum Einbau der Sauerstoffatome durchzuführen.

Beim Erhitzen der Grünkörper in sauerstoffhaltiger Atmosphäre erfolgt zunächst die Entfernung der organischen Bestandteile, ohne daß ein Einbau von Sauerstoffatomen stattfindet. Dieser Verfahrensschritt ist in der EP 0 276 148 A2 beschrieben. Folglich haben die nach diesem vorbekannten Verfahren hergestellten Keramiken unabhängig von den im dort angegebenen Temperaturbereich von 430 bis 820°C gewählten Temperaturen alle dieselbe Wärmeleitfähigkeit.

Im Unterschied zu diesem vorbekannten Verfahren wird erfindungsgemäß nach der Entfernung der organischen Bestandteile die thermische Behandlung in sauerstoffhaltiger Atmosphäre fortgesetzt, um einen gezielten Einbau von Sauerstoffatomen in das Aluminiumnitridgitter zu erreichen und damit die Wärmeleitfähigkeit auf bestimmte Werte einzustellen. Das Temperaturniveau, auf das aufgeheizt wird, und/oder die Haltezeit bei dieser Temperatur werden in Abhängigkeit von der gewünschten Wärmeleitfähigkeit der Keramik gewählt. So wird zum Beispiel bei sonst identischen Bedingungen der thermischen Behandlung bei einem höheren Temperaturniveau mehr Sauerstoff eingebaut und somit ein Formkörper mit niedriger Wärmeleitfähigkeit erhalten als bei einer niedrigeren Temperatur. Unter "sonst identischen Bedingungen" sind die Keramikzusammensetzung, die Aufheiz- und Abkühlraten, die Haltezeit der Temperatur, der Sauerstoffgehalt der Atmosphäre, bewegte oder ruhende sauerstoffhaltige Atmosphäre gemeint. Ändert man anstelle der Temperatur die Haltezeit bei dieser Temperatur und läßt die anderen Bedingungen identisch, so bekommt man bei längerer Haltezeit Formkörper mit niedrigerer Wärmeleitfähigkeit als bei kürzeren Haltezeiten. Selbstverständlich kann man auch das Temperaturniveau und die Haltezeit ändern, um die gewünschte Wärmeleitfähigkeit zu erhalten.

Je nach der gewünschten Wärmeleitfähigkeit kann das Temperaturniveau, auf das aufgeheizt wird, in einem Temperaturbereich gewählt werden, der von der Temperatur reicht, die für die Entfernung der organischen Bestandteile notwendig ist, bis zu Temperaturen unterhalb der Sintertemperatur.

Temperaturen unterhalb der zur Entfernung der organischen Bestandteile notwendigen Temperatur sind unzweckmäßig, da nach dem Ausheizen der organischen Bestandteile die Formkörper etwas abgekühlt werden müßten. Im Fall von Aluminiumnitrid können zum Beispiel Temperaturen von etwa 400°C bis etwa 1000°C gewählt werden.

Wie aus den obigen Ausführungen über den Einfluß von Temperaturniveau und Haltezeit zu entnehmen ist, kann man zu Formkörpern mit etwa gleicher Wärmeleitfähigkeit kommen, wenn man einmal auf ein höheres Temperaturniveau erhitzt und eine kürzere Haltezeit wählt und im anderen Fall auf ein niedrigeres Temperaturniveau erhitzt und eine längere Haltezeit wählt.

Durch das erfindungsgemäße Verfahren kann man Wärmeleitfähigkeiten in einem sehr engen vorbestimmten Bereich erhalten mit Schwankungen von etwa 5 bis 10 W/m·K.

Von weitaus geringerem Einfluß als Temperaturniveau und Haltezeit auf die erzielte Wärmeleitfähigkeit des Formkörpers sind die Aufheiz- und Abkühlraten. Es besteht ein Trend zu etwas niedrigeren Wärmeleitfähigkeiten, wenn man sehr lange Aufheiz- und Abkühlzeiten wählt. In erster Linie richtet sich die gewählte Aufheizrate nach der Form des Grünkörpers, insbesondere seiner Dicke, und nach Art und Menge der im Grünkörper enthaltenen organischen Bestandteile. Die Aufheizrate darf nicht so hoch sein, daß der Grünkörper beim Erhitzen beschädigt wird. Ebenso wird die Abkühlrate in erster Linie so gewählt, daß sie für den Formkörper verträglich ist, d.h. zu kurze Abkühlraten sollten vermieden werden, da sie zu Rissen führen können.

Die Art der verwendeten sauerstoffhaltigen Atmosphäre, wie Luft oder reiner Sauerstoff, sowie ruhende Atmosphäre oder ein sauerstoffhaltiger Gasstrom haben nur einen sehr geringen Einfluß auf die erzielte Wärmeleitfähigkeit des Formkörpers. Aus wirtschaftlichen Gründen wird das erfindungsgemäße Verfahren vorzugsweise in nicht bewegter Luft durchgeführt.

Das erfindungsgemäße Verfahren ist insbesondere für Aluminiumnitrid-Keramik geeignet. Wie bereits eingangs ausgeführt wurde, wird zum Beispiel zur Herstellung von thermischen Messern aus Aluminiumnitrid eine Wärmeleitfähigkeit von etwa 70 bis 100 W/m.K gewünscht. Mit dem erfindungsgemäßen Verfahren lassen sich aber auch Aluminiumnitrid-Keramiken mit außerhalb dieses Bereichs liegenden Wärmeleitfähigkeiten herstellen.

Die Bildung des Grünkörpers kann nach allen üblichen Formgebungsverfahren durchgeführt werden. Bei Aluminiumnitrid-Keramik kann zum Beispiel Pressen, Schlickerguß und Foliengießen verwendet werden. Außer den organischen Bestandteilen, die zur Formgebung notwendig sind, können die keramischen Materialien Sinterhilfsmittel, wie Y₂O₃, enthalten.

Nach dem Ausheizen der organischen Bestandteile und der thermischen Behandlung zur Einstellung der vorbestimmten Wärmeleitfähigkeit wird der Formkörper wie üblich bei Temperaturen von etwa 1800°C oder darüber in nichtoxidierender Atmosphäre gesintert.

Die Erfindung wird an Hand der folgenden Beispiele näher erläutert.

### Beispiel 1

Es wurde ein Grünkörper in Form einer Folie mit 1,1 mm Dicke durch Gießen hergestellt. Das keramische Material hatte folgende Zusammensetzung:
91 Gew.-% anorganische Keramik, die zu 95 Gew.-% aus Aluminiumnitrid und zu 5 Gew.-% aus Yttriumoxid (Y₂O₃) bestand,
5 Gew.-% Polyvinylalkohol
3 Gew.-% Dibutylphthalat
1 Gew.-% Dispergiermittel.

Die Grünfolie wurde in einem rampengesteuerten Ofen in stehender Luft in 3 h auf 850^{o}C aufgeheizt und 2 h bei dieser Temperatur gehalten. Dann wurde während 3 h auf Raumtemperatur abgekühlt. Die Folie wurde bei 1820^{o}C 3 h in Stickstoffatmosphäre gesintert. Die Wärmeleitfähigkeit betrug 45±5 W/m·K. Dieser Wert ist wie auch bei allen folgenden Messungen ein Mittelwert aus mindestens 10 Versuchen.

### Beispiel 2

Es wurde wie in Beispiel 1 gearbeitet, wobei jedoch die Temperatur 820°C betrug. Das erhaltene Substrat hatte eine Wärmeleitfähigkeit von 56 ± 5 W/m·K.

### Beispiel 3

Es wurde wie in Beispiel 1 gearbeitet, wobei jedoch bei der thermischen Behandlung folgende Änderungen vorgenommen wurden. Die Grünfolie wurde in 8 h auf 580^{o}C aufgeheizt und 3 h bei dieser Temperatur gehalten. Diese Temperaturbehandlung wird normalerweise bei Grünfolien dieser Art zum Ausheizen von Polyvinylalkohol, Dibutylphthalat und dem Dispergiermittel angewandt, bevor die Folien gesintert werden.

Die Folie wurde im vorliegenden Fall weiter auf 800°C aufgeheizt und 1 h bei dieser Temperatur gehalten. Anschließend wurde während 4 h auf Raumtemperatur abgekühlt. Die Wärmeleitfähigkeit des Substrats betrug 65 ± 5 W/m·K.

### Beispiel 4

Es wurde wie in Beispiel 1 gearbeitet, wobei die thermische Behandlung jedoch folgendermaßen geändert wurde. Es wurde während 1,5 h auf 800°C aufgeheizt, die Haltezeit bei dieser Temperatur betrug 4 h. Anschließend wurde während 1,5 h auf Raumtemperatur abgekühlt. Die Wärmeleitfähigkeit des Substrats betrug 65 ± 5 W/m·K.

### Beispiel 5

Es wurde wie in Beispiel 1 gearbeitet, jedoch mit folgenden Änderungen bei der thermischen Behandlung. Es wurde während 3 h auf 800°C aufgeheizt, 2 h diese Temperatur gehalten und danach während 3 h auf Raumtemperatur abgekühlt. Die Wärmeleitfähigkeit des Substrats betrug 80 ± 11 W/m·K.

### Beispiel 6

Es wurde wie in Beispiel 1 gearbeitet mit folgenden Abänderungen bei der thermischen Behandlung. Die Aufheizzeit betrug 1,5 h, die Temperatur 900°C, die Haltezeit 1 h und die Abkühlzeit 1,5 h. Es wurde eine Wärmeleitfähigkeit von 93 ± 5 W/m·K erreicht.

### Beispiel 7

Es wurde wie in Beispiel 1 gearbeitet mit folgenden Abänderungen bei der thermischen Behandlung. Die Aufheizzeit betrug 1,5 h, die Temperatur 850°C, die Haltezeit 1 h und die Abkühlzeit 1,5 h. Es wurde eine Wärmeleitfähigkeit von 136 ± 5 W/m·K erreicht.

### Beispiel 8

Es wurde wie in Beispiel 1 gearbeitet mit folgenden Abänderungen bei der thermischen Behandlung. Die Aufheizzeit betrug 8 h, die Temperatur 580°C, die Haltezeit 8 h und die Abkühlzeit 4 h. Es wurde eine Wärmeleitfähigkeit von 160 ± 5 W/m·K erreicht.

## Patentansprüche

1. Verfahren zur Herstellung von nichtoxidischer Keramik mit einer Wärmeleitfähigkeit in einem vorbestimmten Bereich, bei dem ein Formkörper aus nichtoxidischem keramischem Material zum Entfernen organischer Bestandteile erhitzt und abschließend in nichtoxidierender Atmosphäre gesintert wird, dadurch gekennzeichnet, daß der Formkörper nach dem Ausheizen der organischen Bestandteile und vor dem Sintern in einer sauerstoffhaltigen Atmosphäre thermisch behandelt wird zum Einbau von Sauerstoffatomen in das Kristallgitter der nichtoxidischen Keramik, wobei die Höhe der Temperatur und/oder die Haltezeit bei dieser Temperatur in Abhängigkeit des vorbestimmten Bereichs der Wärmeleitfähigkeit gewählt werden.

2. Verfahren nach Anspruch 1, dadurch gekennzeichnet, daß als nichtoxidisches keramisches Material Aluminiumnitrid verwendet wird.

3. Verfahren nach Anspruch 1 oder 2, dadurch gekennzeichnet, daß die Höhe der Temperatur, auf der der Formkörper in der sauerstoffhaltigen Atmosphäre gehalten wird, umso niedriger gewählt wird, je höher der vorbestimmte Bereich der Wärmeleitfähigkeit ist bei sonst identischen Bedingungen der thermischen Behandlung.

4. Verfahren nach einem der Ansprüche 1 bis 3, dadurch gekennzeichnet, daß die Haltezeit, während der der Formkörper in der sauerstoffhaltigen Atmosphäre auf der Temperatur gehalten wird, umso kürzer gewählt wird, je höher der vorbestimmte Bereich der Wärmeleitfähigkeit ist, bei sonst identischen Bedinungen der thermischen Behandlung.

5. Verfahren nach einem der Ansprüche 1 bis 4, dadurch gekennzeichnet, daß der Formkörper zum Entfernen der organischen Bestandteile in sauerstoffhaltiger Atmosphäre erhitzt wird und die thermische Behandlung zum Einbau der Sauerstoffatome in das Gitter der nichtoxidischen Keramik sich ohne zwischenzeitliche Abkühlung des Formkörpers daran anschließt.

6. Verfahren nach einem der Ansprüche 1 bis 5, dadurch gekennzeichnet, daß die thermische Behandlung zum Einbau von Sauerstoffatomen in das Gitter der nichtoxidischen Keramik in einem Temperaturbereich durchgeführt wird, der von der zum Ausheizen der organischen Bestandteile notwendigen Temperatur bis zu Temperaturen unterhalb der Sintertemperatur reicht.

7. Verfahren nach einem der Ansprüche 1 bis 6, dadurch gekennzeichnet, daß die thermische Behandlung zum Einbau von Sauerstoffatomen in das Gitter der nichtoxidischen Keramik in nicht bewegter Luft durchgeführt wird.
